# EUROPEAN PATENT SPECIFICATION

(11) **EP 3 150 468 B1**
(45) Date of publication and mention of the grant of the patent: **14.08.2019**
(21) Application number: 16191359.5
(22) Date of filing: 29.09.2016
(51) Int. Cl.: B62D 55/04

(54) **TRACK UNIT FOR GROUND WORK VEHICLE**
KETTENEINHEIT FÜR BODENARBEITSFAHRZEUG
UNITÉ DE CHENILLE POUR VÉHICULE DE TRAVAIL TERRESTRE

(30) Priority: 02.10.2015 IT UB20154182
(43) Date of publication of application: 05.04.2017
(73) Proprietor: CAMSO MANUFACTURING ITALY S.R.L., 20121 Milano (IT)
(72) Inventor: CANOSSA, Riccardo, 46036 REVERE MN (IT); TRATTA, Giuseppe, 25010 REMEDELLO BS (IT)
(74) Representative: Modiano, Micaela Nadia

(56) References cited:
- EP-A1- 2 360 085
- WO-A2-2008/073456
- US-A1- 2015 197 279

## Description

The present invention relates to a track unit for ground work vehicle.

As is known, in the use of ground work vehicles, such as for example tractors or machines that harvest agricultural products, such as combine harvesters or the like, it is often necessary, due to functional reasons linked to the characteristics of the ground or to the type of operations to be performed, to mount alternately, at the ends of at least one axle of the machine, simple wheels or track units.

Typically, the track units used on these machines comprise a supporting structure for a driving wheel, which is designed to move a track arranged in contact with guiding wheels and ground resting rollers which are associated with the same supporting structure.

Ground work vehicles of the type cited above are normally provided with a motor drive unit which is structured to give the machines values of the transmission ratio, i.e., of the translation speed, that are correct when the machines are in the configuration with simple wheels.

Upon transition, in the alternation cited above, to the presence of track units according to the background art, the transmission ratio of the axle is reduced considerably due to the reduction of the diameter of the driving wheel of the track units with respect to the diameter of the wheels, with consequent reductions of the maximum forward travel speed and incorrect synchronization between the axles of the machine when the original wheels are mounted on at least one of them, as in the typical case of track units mounted only on the rear axle of the tractor.

EP 2 360 085 A1 discloses a tracked unit for a ground work vehicle, comprising a structure for supporting a drive wheel which transmits motion to a track for resting on the ground, the tracked unit being designed to be fitted to a final reduction unit, which is located at one end of at least one axle of the work vehicle, which is provided with a motor drive adapted to give the vehicle correct translation speed values in the configuration in which wheels are fitted at the ends of the axle. A plate is provided which is adapted to be associated detachably with a flange that is provided monolithically at the end of the axle, the plate being adapted to support, at one face, the final reduction unit directly associated with the drive wheel of the tracked unit and, at the other face, a step-up gear system, in which the input shaft is connected to the drive shaft of the motor drive system with which the work vehicle is provided, while the output shaft is connected to the input shaft of the final reduction unit.

US 2015/197279 A1 discloses a steering knuckle to be used with the steering assembly of a vehicle such as a farming tractor. The steering knuckle comprises preconfigured attachment areas where attachment brackets can be releasably yet rigidly secured. The attachment areas may be further reinforced with additional knuckle material (e.g. metal, metallic alloy). The steering knuckle provides predetermined and preconfigured attachment locations where a wheel-replacing track system can be secured, thereby allowing the track system to be mounted to the vehicle while avoiding attachment at inconvenient or weak locations.

The aim of the present invention is to provide a track unit that can be mounted detachably on the end flanges of an axle of a ground work vehicle as an alternative to a simple wheel without the interposition of transmission boxes and without touching the motor drive unit of the machine, any variations of the transmission ratio of the machine remaining substantially absent.

Within this aim, an object of the present invention is to provide a track unit that is capable of offering the greatest assurances of reliability and safety in operation.

Another object of the invention is to provide a track unit that has a simple structure and is competitive from the economic standpoint.

This aim, as well as these and other objects that will become better apparent hereinafter are achieved by a track unit for ground work vehicle, according to the invention, as defined in claim 1.

Further characteristics and advantages of the present invention will become better apparent from the description of some preferred but not exclusive embodiments of the track unit according to the invention, illustrated by way of nonlimiting example in the accompanying drawings, wherein:

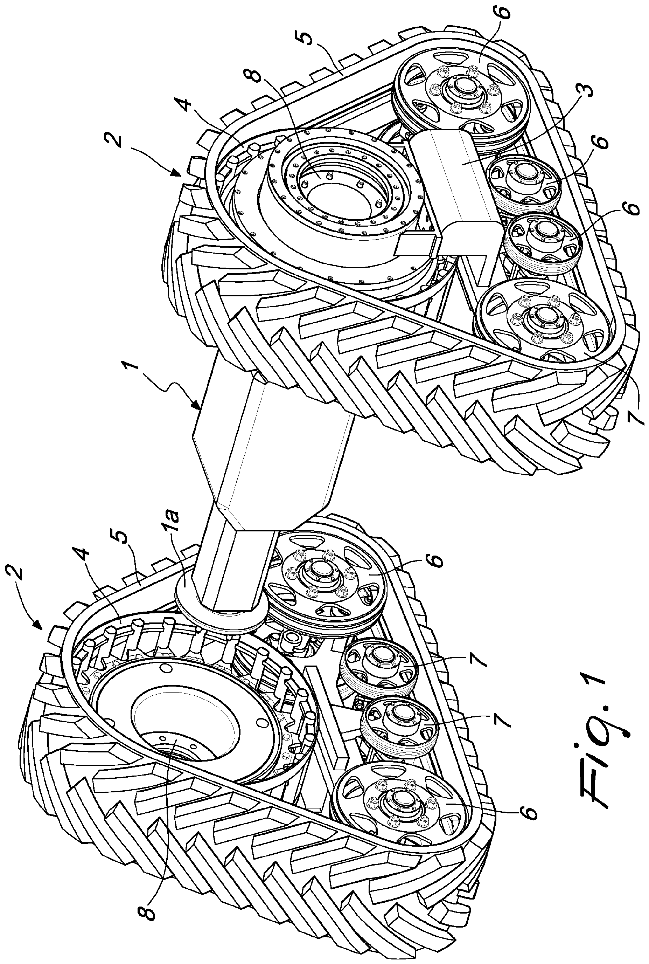

Figure 1 is a perspective view of an axle of a work vehicle provided with track units according to the invention in a first embodiment thereof;
Figure 2 is a partially sectional perspective view of a track unit according to the embodiment of Figure 1;
Figure 3 is a different partially sectional perspective view of the track unit according to the embodiment of Figure 1;
Figure 4 is a partial sectional perspective view of a second embodiment of the track unit according to the invention;
Figure 5 is a perspective view, taken from a different angle and partially in cross-section, of a portion of the second embodiment of the track unit according to the invention, with parts shown in phantom lines in order to show the interior thereof;
Figure 6 is a perspective view of an axle of a work vehicle with a track unit according to the invention in a third embodiment;
Figure 7 is a perspective view of the track unit according to the invention in the third embodiment, taken from another angle and with a driving wheel shown in phantom lines;
Figure 8 is a perspective view of an axle of a work vehicle provided with the track unit according to the invention in the third embodiment, with parts omitted and others shown in phantom lines and with a reaction arm coupled to an element associated with the work vehicle.

With reference to the figures, the reference numeral 1 designates an axle of a work vehicle, with which two mirror-symmetrically identical track units 2 are associated.

The axle 1 is designed to be rotationally actuated about its own axis by a motor drive unit connected to the work vehicle.

Each track unit 2 comprises a supporting structure 3 for a driving wheel 4 that is designed to move a track 5, which is arranged in contact with guiding wheels 6 and ground resting rollers 7, which are associated, according to one possible embodiment, with the structure 3.

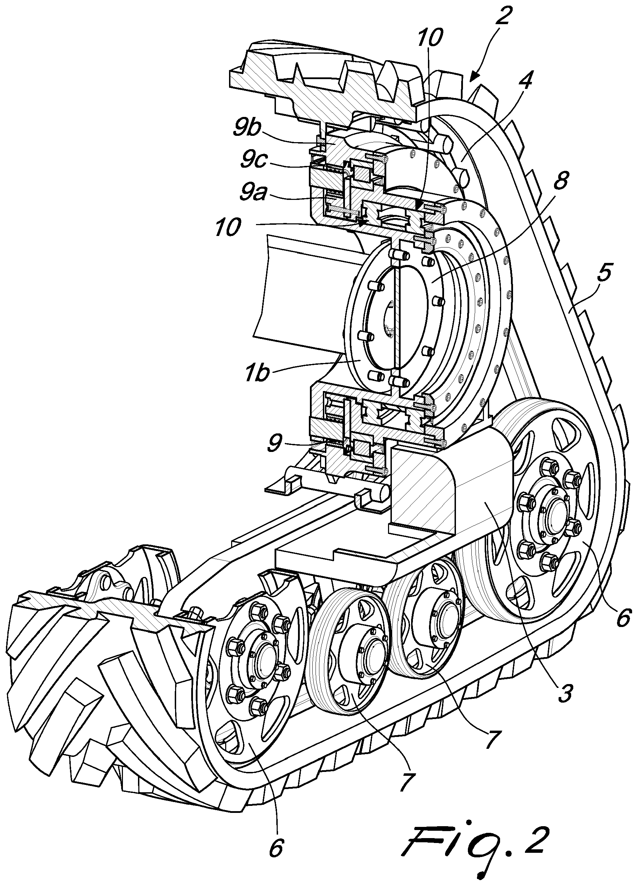

With reference in particular to Figure 2, each track unit 2 is provided with a corresponding hub 8 in order to allow its connection to the axle 1.

More particularly, the axle 1, as per se known, is provided, at its two opposite ends, with flanges 1a, 1b, which are entrusted with the function of supporting a respective track unit 2, by means of the coupling with the corresponding hub 8, as an alternative to simple wheels, without, it is important to note, undergoing any change.

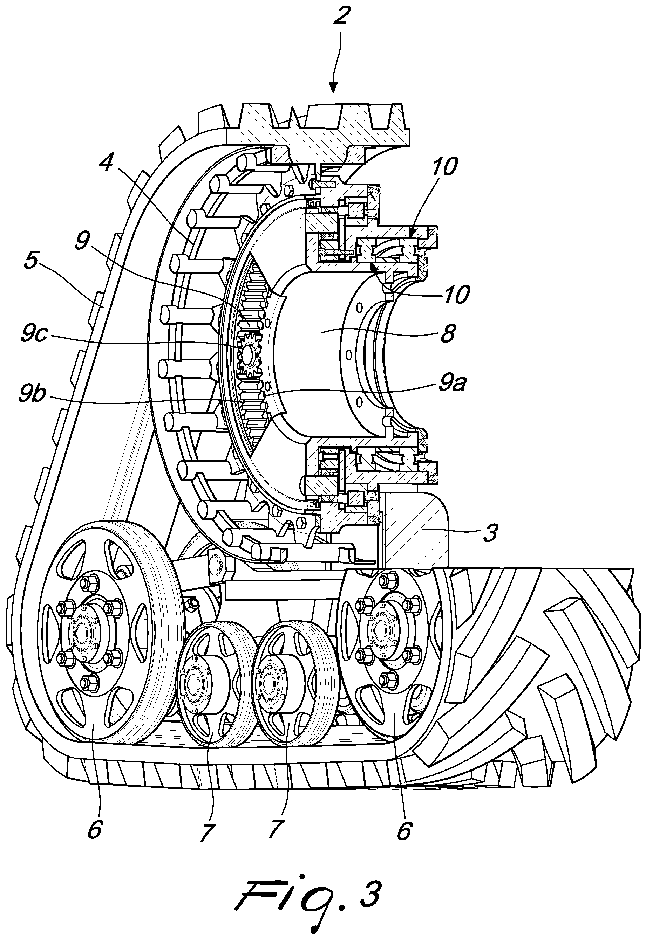

With reference to Figure 3, the hub 8 is designed to support the structure 3 of the track unit 2 by means of bearings 10 and is connected to the driving wheel 4 by means of an angular speed-increasing gear system, constituted advantageously, according to the example of Figure 3, by an epicyclic gear system 9, which has the function of increasing the rotation rate from the hub 8 of the track unit 2, which constitutes its input, to the driving wheel 4, which constitutes its output.

In greater detail, the epicyclic gear system 9 advantageously has a sun gear 9a, which is integral with the structure 3, a ring gear 9b, which is substantially coaxial to the hub 8 and integral with the driving wheel 4 of the track unit 2, and at least one pair of planet gears 9c, which mesh with the sun gear 9a and with the ring gear 9b. With reference again to the example of Figures 2 and 3, the planet gears 9c are advantageously supported, at the corresponding rotation pivot, by the hub 8.

The presence of the epicyclic gear system 9 allows to compensate the reduction factor of the transmission ratio, i.e., of the translation speed of the work vehicle, in the configuration with track units 2 with respect to the configuration with simple wheels, which is due to the smaller diameter of the driving wheel 4 of the track units 2 with respect to the diameter of the wheels, thus achieving a substantial equality of the values of the transmission ratio, i.e., of the speed, in the two configurations.

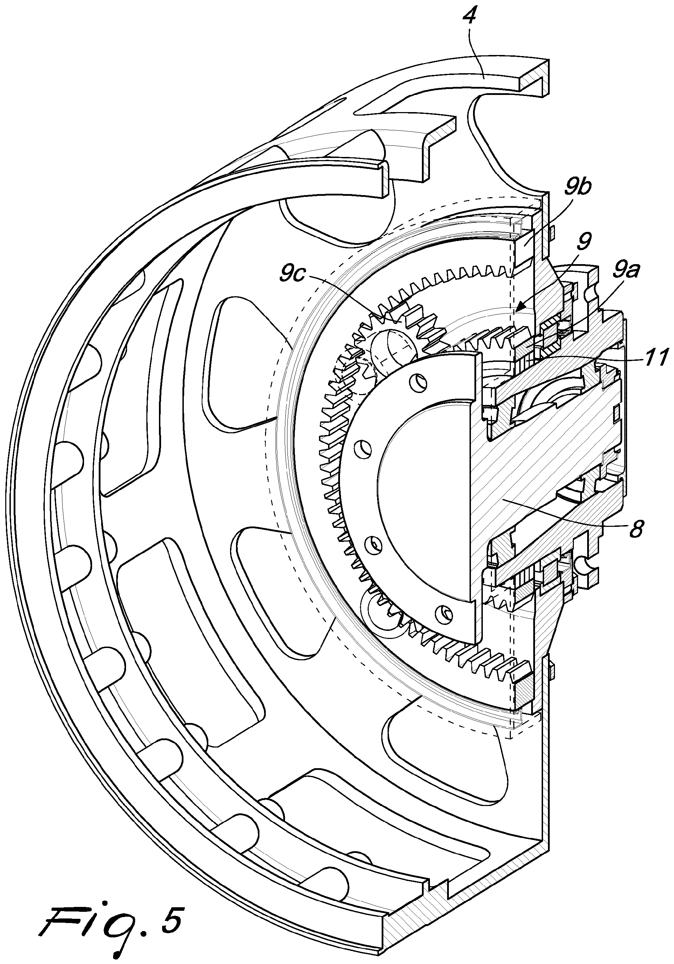

With reference again to Figure 3, the sun gear 9a of the epicyclic gear system 9, being its reaction element, can advantageously be rendered integral with the structure 3 of the track unit 2 with the interposition of a torque limiter safety coupling 11, shown schematically in Figure 5, in order to eliminate the motor moment peaks that might cause damage to the internal transmission teeth of the track 5.

For example, the safety coupling 11 can be constituted by a pack of disks which are preloaded axially according to the maximum transmissible torque.

It should be noted that in general the safety coupling 11 can be associated with at least any one of the elements that constitute the angular speed-increasing gear system.

Operation of the truck unit according to the invention is as follows. The axle 1 turns the hubs 8 of the track units 2 that have been connected detachably to the flanges 1a, 1b, arranged at its opposite ends, as an alternative to simple wheels.

The meshing of the sun gears 9a with the corresponding planet gears 9c of the epicyclic gear systems 9 associated with the track units 2 and the driving of the rotation pins of the planet gears 9c by the hubs 8 causes the rotation of the ring gears 9b that are integral with the driving wheels 4 with a higher angular velocity than the angular velocity of the axle 1, with a consequent multiplication of the rotation rate and compensation of the reduction of the transmission ratio in the transition from the configuration with simple wheels to the configuration with the track units 2.

In practice it has been found that the invention is capable of achieving fully the intended aim and objects.

All the characteristics of the invention indicated above as advantageous, convenient or the like may also be omitted or be replaced with equivalents.

The individual characteristics presented with reference to general teachings or to particular embodiments may all be present in other embodiments or may replace characteristics in these embodiments.

The invention thus conceived is susceptible of numerous modifications and variations, all of which are within the scope of the appended claims.

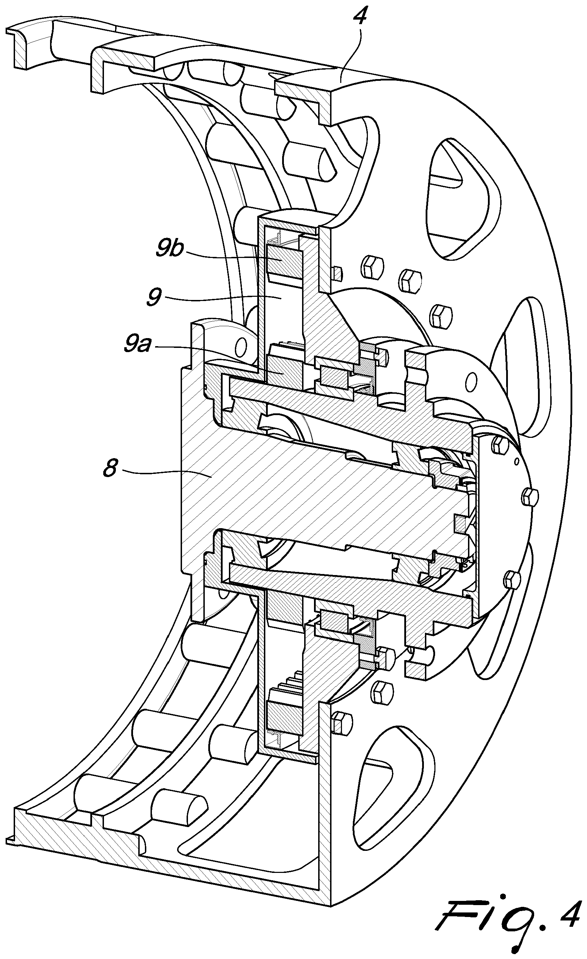

Thus, for example, Figures 4 and 5 show a constructive variation in which, as a supporting element of the track unit 2, there is a hub 8 that has a spindle-like shape, instead of the hub 8 with an open configuration of the preceding example.

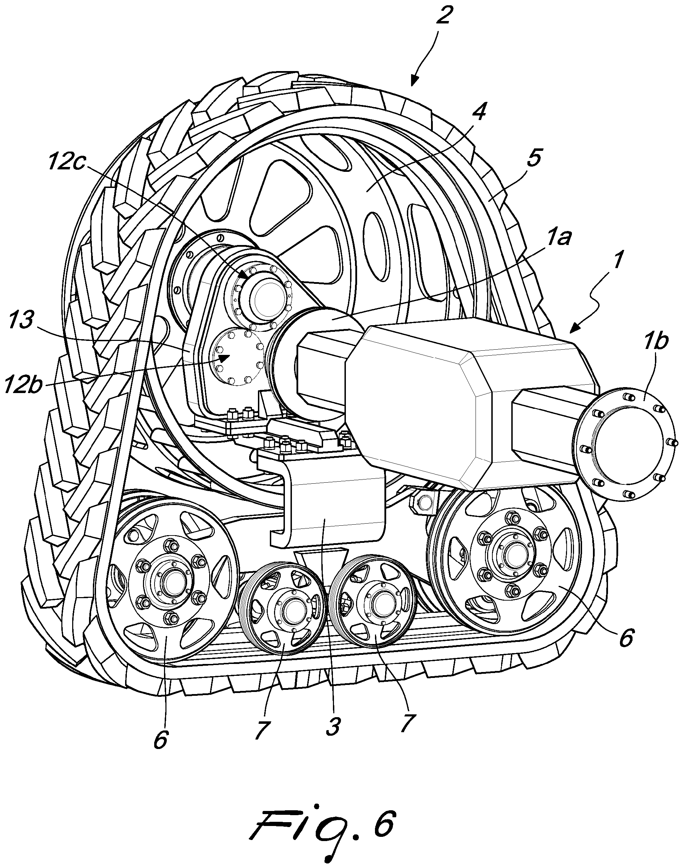

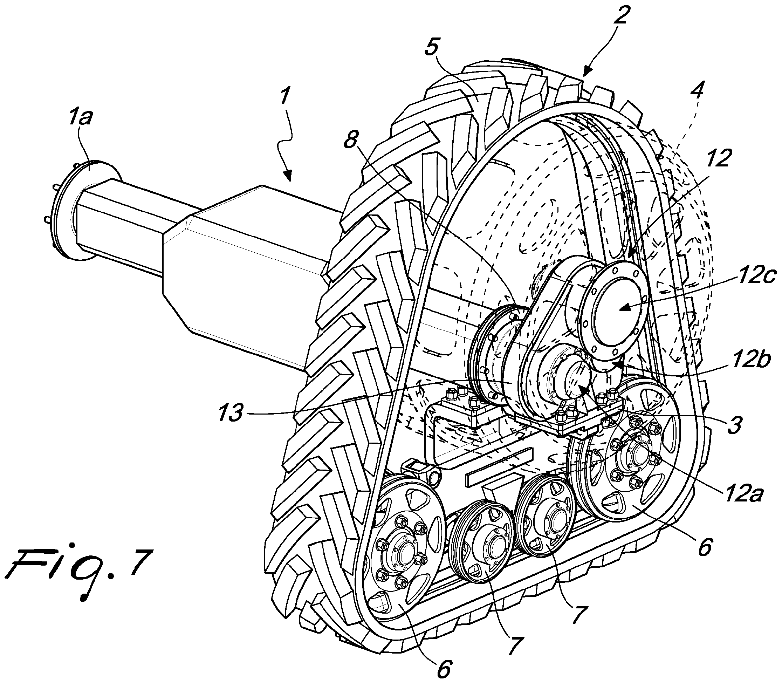

According to a third constructive variation, shown in Figures 6 and 7, if the driving wheel 4 must be arranged off-axis with respect to the input of the transmission, i.e., to the axle 1 of the work vehicle, the angular speed-increasing gear system can be constituted by an ordinary gear system 12, for example with three shafts.

More particularly, the ordinary gear system 12 conveniently comprises a first shaft 12a, which is provided with a first gear and is integral with the hub 8 that is connected to a respective flange 1a, 1b of the axle 1, a second shaft 12b, which is supported by a supporting body 13 which is connected, conveniently, to the structure 3 of the track unit 2 and is provided with a second gear that engages the first gear connected to the hub 8, and a third shaft 12c, which is integral with the driving wheel 4 and is provided with a third gear that engages the second gear.

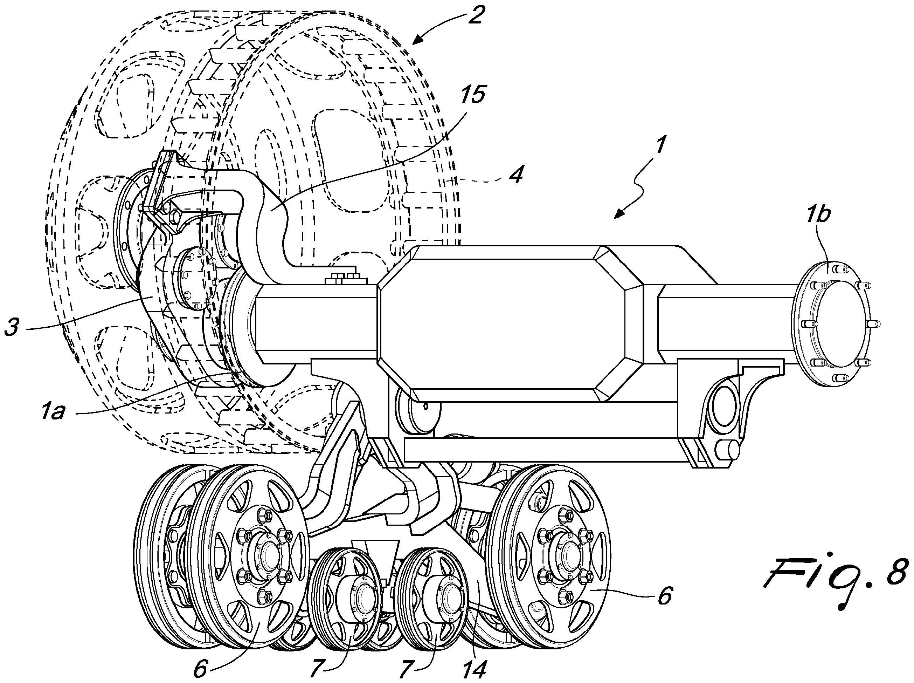

In a further embodiment, shown in Figure 8, there is a structure 3 for supporting a driving wheel 4 that is provided with an angular speed-increasing gear system, such as for example an ordinary gear system 12, and is not supported by a second supporting structure 14 of the guiding wheels 6 and ground resting rollers 7, the reaction of the gear system being absorbed by a coupling element, constituted for example by a reaction arm 15, which is associated with the work vehicle and is connected to the supporting body 13 or to the structure 3.

In practice, the materials used, so long as they are compatible with the specific use, as well as the shapes and dimensions, may be any according to the requirements.

All the details may furthermore be replaced with other technically equivalent elements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A track unit for ground work vehicle, comprising a structure (3) for supporting a driving wheel (4) adapted to transmit motion to a ground resting track (5), said track unit being designed to be mounted as an alternative to a wheel at the end of at least one axle (1) of said work vehicle that is provided with a motor drive unit designed with such characteristics as to give correct values of the transmission ratio in the configuration in which wheels are mounted at the ends of the axle (1), the track unit further comprising a hub (8) designed to be associated detachably with said axle (1), **characterized in that** between said hub (8) and said driving wheel (4) there being a speed-increasing gear system (9, 12) in order to provide the axle (1) with a suitable transmission ratio, typically similar to that with the wheeled configuration.

2. The track unit according to claim 1, **characterized in that** a torque limiter safety coupling (11) is associated with at least one of the elements of said speed-increasing gear system in order to eliminate the motor moment peaks that might damage the internal transmission teeth of the track (5).

3. The track unit according to one or more of the preceding claims, **characterized in that** said speed-increasing gear system comprises an epicyclic gear system (9).

4. The track unit according to one or more of the preceding claims, **characterized in that** said epicyclic gear system (9) comprises a sun gear (9a), integral with said structure (3), a ring gear (9b), substantially coaxial to said hub (8) and integral with said driving wheel (4), and at least one pair of planet gears (9c), which mesh with said sun gear (9a) and with said ring gear (9b).

5. The track unit according to one or more of the preceding claims, **characterized in that** said speed-increasing gear system comprises an ordinary gear system (12).

6. The track unit according to one or more of the preceding claims, **characterized in that** said ordinary gear system (12) comprises a first shaft (12a), provided with a first gear and integral with said hub (8), a second shaft (12b) supported by a supporting body (13) and provided with a second gear that meshes with said first gear, and a third shaft (12c), which is integral with said driving wheel (4) and is provided with a third gear that meshes with said second gear.

## Patentansprüche

1. Eine Ketteneinheit für ein Bodenarbeitsfahrzeug, die eine Struktur (3) zum Tragen eines Antriebsrades (4) umfasst, ausgebildet, um die Bewegung auf eine Bodenauflagekette (5) zu übertragen; wobei die Ketteneinheit konstruiert ist, um als Alternative zu einem Rad am Ende mindestens einer Achse (1) des Arbeitsfahrzeugs montiert zu werden, das mit einer Motorantriebseinheit ausgestattet ist, konstruiert mit Eigenschaften, die geeignet sind, korrekte Werte des Übertragungsverhältnisses in der Konfiguration zu verleihen, in welcher Räder an den Enden der Achse (1) montiert sind; wobei die Ketteneinheit weiter eine Nabe (8) umfasst, konstruiert, um lösbar mit der Achse (1) verbunden zu werden; **dadurch gekennzeichnet, dass** sich zwischen der Nabe (8) und dem Antriebsrad (4) ein die Geschwindigkeit erhöhendes Getriebesystem (9, 12) befindet, um der Achse (1) ein geeignetes Übertragungsverhältnis zu verleihen, das typischerweise demjenigen bei der Räderkonfiguration ähnlich ist.

2. Die Ketteneinheit gemäß Anspruch 1, **dadurch gekennzeichnet, dass** eine Drehmomentbegrenzer-Sicherheitskupplung (11) mit mindestens einem der Elemente des die Geschwindigkeit erhöhenden Getriebesystems verbunden ist, um die Motorenmoment-Spitzen zu beseitigen, die die inneren Getriebezähne der Kette (5) beschädigen könnten.

3. Die Ketteneinheit gemäß einem oder mehreren der obigen Ansprüche, **dadurch gekennzeichnet, dass** das die Geschwindigkeit erhöhende Getriebesystem ein Planetengetriebesystem (9) umfasst.

4. Die Ketteneinheit gemäß einem oder mehreren der obigen Ansprüche, **dadurch gekennzeichnet, dass** das Planetengetriebesystem (9) ein Sonnenrad (9a) umfasst, das integral mit der Struktur (3) ist, ein Hohlrad (9b), im Wesentlichen koaxial mit der Nabe (8) und integral mit dem Antriebsrad (4), und mindestens ein Paar von Planetenrädern (9c), die in das Sonnenrad (9a) und das Hohlrad (9b) eingreifen.

5. Die Ketteneinheit gemäß einem oder mehreren der obigen Ansprüche, **dadurch gekennzeichnet, dass** das die Geschwindigkeit erhöhende Getriebesystem ein herkömmliches Getriebesystem (12) umfasst.

6. Die Ketteneinheit gemäß einem oder mehreren der obigen Ansprüche, **dadurch gekennzeichnet, dass** das herkömmliche Getriebesystem (12) eine erste Welle (12a) umfasst, ausgestattet mit einem ersten Getriebe und integral mit der Nabe (8), eine zweite Welle (12b), getragen von einem tragenden Körper (13) und ausgestattet mit einem zweiten Getriebe, das in das erste Getriebe eingreift, und eine dritte Welle (12c), die integral mit dem Antriebsrad (4) und mit einem dritten Getriebe ausgestattet ist, welches in das zweite Getriebe eingreift.

## Revendications

1. Unité à chenilles pour un véhicule de travail au sol, comportant une structure (3) pour supporter une roue motrice (4) adaptée pour transmettre un mouvement à une chenille reposant sur le sol (5), ladite unité à chenilles étant conçue pour être montée comme une alternative à une roue à l'extrémité d'au moins un essieu (1) dudit véhicule de travail qui est pourvu d'une unité d'entraînement par moteur conçue avec des caractéristiques telles qu'elle fournit des valeurs correctes du rapport de transmission dans la configuration dans laquelle des roues sont montées aux extrémités de l'essieu (1), l'unité à chenilles comportant en outre un moyeu (8) conçu pour être associé de manière détachable audit essieu (1), **caractérisé en ce qu'**entre ledit moyeu (8) et ladite roue motrice (4) est agencé un système à engrenages multiplicateurs (9, 12) afin de fournir à l'essieu (1) un rapport de transmission adapté, typiquement similaire à celui avec la configuration à roues.

2. Unité à chenilles selon la revendication 1, **caractérisée en ce qu'**un accouplement de sécurité limiteur de couple (11) est associé à au moins un des éléments dudit système à engrenages multiplicateurs afin d'éliminer les pics de moment du moteur qui pourraient endommager les dents de transmission interne de la chenille (5).

3. Unité à chenilles selon une ou plusieurs des revendications précédentes, **caractérisée en ce que** ledit système à engrenages multiplicateurs comporte un système à engrenages épicycloïdaux (9).

4. Unité à chenilles selon une ou plusieurs des revendications précédentes, **caractérisée en ce que** ledit système à engrenages épicycloïdaux (9) comporte un engrenage planétaire (9a), solidaire de ladite structure (3), une couronne dentée (9b), sensiblement coaxiale audit moyeu (8) et solidaire de ladite roue motrice (4), et au moins une paire d'engrenages satellites (9c), qui s'engrènent avec ledit engrenage planétaire (9a) et avec ladite couronne dentée (9b).

5. Unité à chenilles selon une ou plusieurs des revendications précédentes, **caractérisée** ce que ledit système à engrenages multiplicateurs comporte un système à engrenages ordinaires (12).

6. Unité à chenilles selon une ou plusieurs des revendications précédentes, **caractérisée en ce que** ledit système à engrenages ordinaires (12) comporte un premier arbre (12a), pourvu d'un premier engrenage et solidaire dudit moyeu (8), un deuxième arbre (12b) supporté par un corps de support (13) et pourvu d'un deuxième engrenage qui s'engrène avec ledit premier engrenage, et un troisième arbre (12c), qui est solidaire de ladite roue motrice (4) et est pourvu d'un troisième engrenage qui s'engrène avec ledit deuxième engrenage.
